# EUROPEAN PATENT SPECIFICATION

(11) **EP 3 348 678 B1**
(45) Date of publication and mention of the grant of the patent: **06.11.2019**
(21) Application number: 16843947.9
(22) Date of filing: 07.09.2016
(51) Int. Cl.: D01F 6/62, D01D 5/098, D01D 5/16

(54) **METHOD FOR PRODUCING PEF YARN**
VERFAHREN ZUR HERSTELLUNG VON PEF-GARN
PROCÉDÉ DE PRODUCTION DE FIL PEF

(30) Priority: 08.09.2015 JP 2015177014
(43) Date of publication of application: 18.07.2018
(73) Proprietor: Bridgestone Corporation, Tokyo 104-8340 (JP); Synvina C.V., 1014 BV Amsterdam (NL)
(72) Inventor: IKEDA, Yuji, Tokyo 104-8340 (JP); SUGIMOTO, Kenichi, Tokyo 104-8340 (JP); NAKAJIMA, Hajime, 1014 BV Amsterdam (NL)
(74) Representative: Oxley, Robin John George
(86) International application number: PCT/JP2016/004082
(87) International publication number: WO 2017/043080

(56) References cited:
- WO-A1-2013/149222
- WO-A1-2014/204313
- WO-A1-2014/204313
- WO-A1-2015/105104
- JP-A- S6 147 816
- JP-A- H01 162 820
- JP-A- H04 119 119
- JP-A- H06 184 819
- JP-A- 2010 163 724
- JP-A- 2014 111 852
- JP-A- 2015 518 093
- US-A- 4 923 662
- US-A1- 2012 165 496
- US-A1- 2015 174 961
- US-B1- 6 511 747
- KINZO ISHIKAWA ET AL. KAGAKU SEN'I I 20 March 1970, pages 167 - 181, XP009504845

## Description

### TECHNICAL FIELD

The present disclosure relates to a method for producing a polyethylene-2,5-furandicarboxylate (PEF) raw yarn.

### BACKGROUND

Synthetic fibers made of nylon or polyethylene terephthalate (PET) have been widely used as fibers used for reinforcing cords etc. of tires. However, these synthetic fibers impose a large environmental burden because they are produced from raw materials of fossil origin.

This has led to recent development of fibers produced from raw materials of natural origin for use as fibers with a small environmental burden. For example, PTL 1 discloses a fiber made of polyethylene-2,5-furandicarboxylate (PEF) (PEF fiber).

### CITATION LIST

### Patent Literature

PTL 1: WO2014/204313

### SUMMARY

### (Technical Problem)

PTL 1 discloses a PEF raw yarn produced by two-stage spinning/drawing.

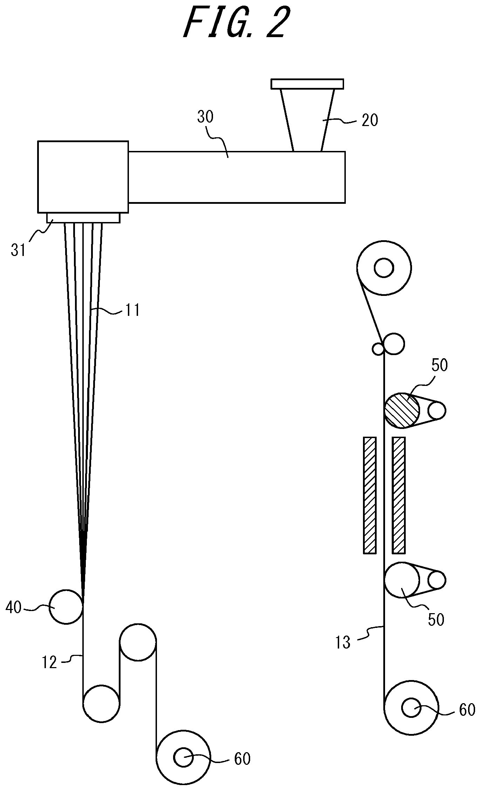

Referring to FIG. 2, two-stage spinning/drawing will be described. In the two-stage spinning/drawing process, a PEF-containing resin composition is extruded through a die 31 of an extruder 30 into filaments 11, which are then coated with an oil agent by means of an oiling roller 40, bundled into an undrawn yarn 12, and once recovered by being taken up by a take-up machine 60. Subsequently, the recovered undrawn yarn 12 is drawn by drawing rollers 50, and a drawn PEF raw yarn 13 is taken up by the take-up machine 60.

However, the two-stage spinning/drawing process is inferior in productivity and produced PEF raw yarns are insufficient in storage modulus for applications requiring high strength such as tires, resulting in needs for further improvements.

An object of the present disclosure is therefore to provide a PEF raw yarn production method capable of efficient production of a PEF raw yarn having a high storage modulus.

### (Solution to Problem)

Namely, the disclosed PEF raw yarn production method is directed to a method for producing a polyethylene-2,5-furandicarboxylate (PEF) raw yarn, which includes a spinning/drawing process wherein an undrawn yarn, obtained by melt-spinning of a PEF-containing resin composition, is continuously drawn into a PEF raw yarn without being recovered and the PEF raw yarn is taken up, wherein the ratio of a rate (T) of taking up the PEF raw yarn to a rate (E) of extrusion of the resin composition into filaments during the melt-spinning (T/E) is 700 to 2,000.

With the disclosed production method, it is possible to efficiently provide a PEF raw yarn having a high storage modulus.

In the disclosed production method, it is preferred that PEF included in the resin composition has an intrinsic viscosity of 0.5 to 1.5 dl/g.

With this configuration, it is possible to produce a PEF raw yarn having a higher storage modulus.

### (Advantageous Effect)

According to the present disclosure, it is possible to provide a PEF raw yarn production method capable of efficient production of a PEF raw yarn having a high storage modulus.

### BRIEF DESCRIPTION OF THE DRAWINGS

In the accompanying drawings:
FIG. 1 is a schematic view for explaining a PEF raw yarn production method according to an embodiment of the present disclosure;
FIG. 2 is a schematic view for explaining an example of a conventional PEF raw yarn production method; and
FIG. 3 is a schematic flowchart of a method for a PEF raw yarn production method according to an embodiment of the present disclosure.

### DETAILED DESCRIPTION

An embodiment of the disclosed method for producing a polyethylene-2,5-furandicarboxylate (PEF) raw yarn will now be described in detail.

### <PEF Raw Yarn Production Method>

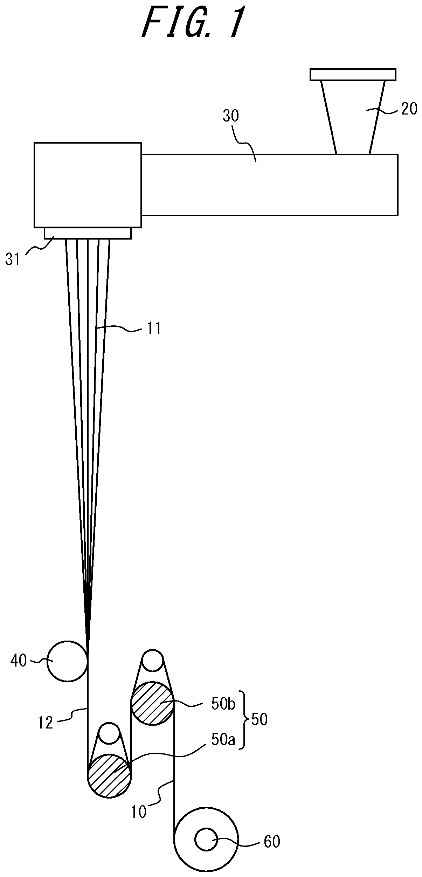

The disclosed PEF raw yarn production method includes, as illustrated in FIG. 1, a spinning/drawing process wherein an undrawn yarn 12, obtained by melt-spinning of a PEF-containing resin composition, is continuously drawn into a PEF raw yarn 10 without being recovered and the PEF raw yarn 10 is taken up.

Because the PEF raw yarn is produced through a sequence of steps without taking up a melt-spun undrawn yarn along the way, PEF raw yarns can be efficiently produced in short time without incurring cost increase. Furthermore, drawing can be effected at high draw ratio because the drawing step is carried out before the microstructure of the undrawn yarn 12, obtained by melt-spinning of the resin composition, changes and stabilizes over time. As a result, it is possible to obtain the PEF raw yarn 10 having a high storage modulus.

As used herein, "storage modulus" refers to a value measured by the method described in (Storage Modulus) in the section [Evaluations] described later.

In the conventional PEF raw yarn production method, as illustrated in FIG. 2, the undrawn yarn 12 obtained by melt-spinning is recovered once and therefore the structure of the recovered undrawn yarn 12 changes toward stabilization over time. Because undrawn yarns with stabilized structure cannot be drawn at high draw ratio, PEF raw yarns 13 having a high storage modulus cannot be obtained.

The spinning/drawing process can include a plurality of steps.

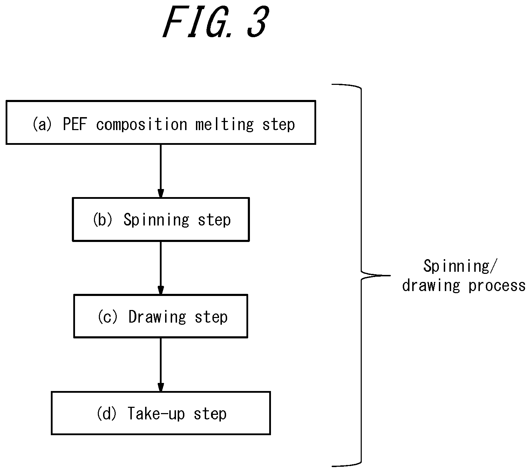

Herein, in the spinning/drawing process, the step wherein the PEF-containing resin composition (PEF composition) is prepared and melted may be referred to as a "PEF composition melting step," the step wherein the melted PEF composition is extruded into filaments and the filaments are bundled into an undrawn yarn may be referred to as a "spinning step," the step wherein the undrawn yarn is drawn into a PEF raw yarn may be referred to as a "drawing step," and the step wherein the PEF raw yarn is taken up may be referred to as a "take-up step." Namely, the spinning/drawing process preferably includes, for example, as illustrated in FIG. 3, a PEF composition melting step (step (a) in FIG. 3), a spinning step (step (b) in FIG. 3), a drawing step (step (c) in FIG. 3), and a take-up step (step (d) in FIG. 3) in the order presented.

Herein, a PEF raw yarn obtained by the disclosed PEF raw yarn production method (drawn raw yarn as denoted by reference sign 10 in FIG. 1) may be simply referred to as a "PEF raw yarn."

### (PEF Composition Melting Step)

The PEF composition comprises at least PEF and may further comprise other resins and additives.

The PEF composition melting step is, for example, a step wherein a PEF composition prepared by mixing PEF and optionally other resins and additives under heating is melted. For example, as illustrated in FIG. 1, the PEF composition can be melted by charging raw materials such as PEF into a hopper 20 and mixing them under heating.

The PEF in the PEF composition is a polymer that comprises a building block represented by the following general formula, which is obtainable by polycondensation of monomer components including at least furan-2,5-dicarboxylic acid and ethylene glycol in the presence of a polymerization catalyst. One or two or more different types of PEF may be used in the PEF composition.

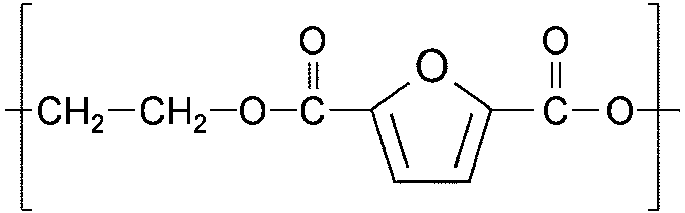

Alternatively, the PEF in the PEF composition may be produced for example through a first step wherein an ester compound is obtained by reacting monomer components including furan-2,5-dicarboxylic acid and ethylene glycol, and a second step wherein the ester compound is polycondensed in the presence of a polymerization catalyst. It is preferred that the second step is carried out under a reduced pressure of 5 to 700 Pa from the perspective of increased polycondensation reaction rate for obtaining PEF.

Examples of furan-2,5-dicarboxylic acid which is a possible raw material of PEF in the PEF composition include furan-2,5-dicarboxylic acids produced from cellulose, glucose or other plant material (e.g., biomass) using methods known in the art. The furan-2,5-dicarboxylic acid used in this reaction may be a furan-2,5-diester compound esterified with, for example, methanol or ethanol. Examples of ethylene glycol which is a possible raw material of PEF in the PEF composition include ethylene glycol and the like produced from bioethanol using methods known in the art.

From the perspective that PEF in the PEF composition imposes a much smaller environmental burden than synthetic resins such as PET which contains terephthalic acid synthesized from raw materials of fossil origin, it is preferred that the PEF is a biobased polymer (bioplastic, plastic prepared from biological resource), more preferably a 100% biobased polymer obtained by polycondensation of furan-2,5-dicarboxylic acid produced from cellulose, glucose or the like and ethylene glycol produced from bioethanol or the like.

The monomer components used for the synthesis of PEF in the PEF composition may further include, for example, terephthalic acid, 2,6-naphthalenedicarboxylic acid, propanediol, and butanediol. From the perspective of more improved storage modulus of the PEF raw yarn, however, it is preferred that the monomer components are only furan-2,5-dicarboxylic acid and ethylene glycol.

The mole ratio of furan-2,5-dicarboxylic acid to ethylene glycol (furan-2,5-dicarboxylic acid/ethylene glycol) in the monomer components is preferably 1/3 to 1/1, and more preferably 1/2.5 to 1/1.5. A mole ratio of 1/3 or more results in improved adhesion between the PEF raw yarn and adhesive. A mole ratio of 1/1 or less results in the PEF having a terminal carboxylic acid amount that falls within a suitable range, so that polymer degradation during or after the production process can be limited.

The intrinsic viscosity of the PEF in the PEF composition is preferably 0.50 to 1.50 dl/g, more preferably 0.70 to 1.10 dl/g. When the intrinsic viscosity is 0.50 dl/g or more, the tenacity of the resulting PEF raw yarn increases, and when it is 1.50 dl/g or less, melt-spinning can be easily performed.

As used herein, "intrinsic viscosity" refers to a value measured by the method described in (Intrinsic Viscosity) in the section [Evaluations] described later.

The weight average molecular weight (Mw) of the PEF in the PEF composition is preferably 55,000 to 200,000, more preferably 62,000 to 180,000, and even more preferably 65,000 to 150,000. When the weight average molecular weight of PEF is 55,000 or more, the tenacity of the resulting PEF raw yarn increases, and when it is 200,000 or less, the melt viscosity of resin decreases, so that the extrusion pressure decreases and therefore spinning can be more easily carried out.

The weight average molecular weight is a value measured by GPC with polystyrene as a standard.

The terminal carboxylic acid amount of the PEF in the PEF composition is preferably 1 to 100 mmol/g, and more preferably 5 to 50 mmol/g. When the terminal carboxylic acid amount is 1 mmol/g or more, the number of reaction sites on PEF at the time when it reacts with adhesives used upon formation of a composite with another member (e.g., tire rubber component) increases, so that the PEF has increased adhesion with adhesives (e.g., epoxy resin-based adhesives). When the terminal carboxylic acid amount is 100 mmol/g or less, a high tenacity of the PEF raw yarn can be ensured even when it is subjected to high-temperature treatment (e.g., vulcanization of tire). The terminal carboxylic acid amount can be adjusted for example by changing the proportions of furandicarboxylic acid and ethylene glycol upon polycondensation or the molecular weight of PEF.

The terminal carboxylic acid amount refers to terminal carboxylic group content in mmol per g of PEF which can be measured by the method described below.

2 g of PEF is dissolved in 50 mL of a 4:6 (weight ratio) mixed solution of phenol and trichloroethylene at 80°C and titrated with a mixed solution of 0.05N KOH and methanol to measure the terminal carboxyl group concentration (mmol/g). Phenol red is used as an indicator for titration, and the time point where the phenol red turned rose pink from yellowish green is regarded as the end point of titration.

From the perspective of reducing the environmental burden, the PEF content in the PEF composition is preferably 80% by mass or more, and more preferably 100% by mass, based on the total amount (100% by mass) of all the resin components contained in the PEF composition. Further, the PEF content in the PEF composition is preferably 75% by mass or more, and more preferably 100% by mass, based on the total amount (100% by mass) of the PEF composition from the perspective of reducing the environmental burden.

Examples of other resins that may be optionally included in the PEF composition include polyamides (e.g., nylon), polyesters (e.g., polyethylene terephthalate, polyethylene naphthalate, polytrimethylene terephthalate (PTT), polybutylene terephthalate (PBT), polytrimethylene furanoate (PTF), polybutylene furanoate (PBF), and polylactic acid), polyolefins (e.g., polypropylene and polyethylene), and polyvinylidene chloride. These resins may be used alone or in combination.

Examples of additives that may be optionally included in the PEF composition include antioxidants, ultraviolet absorbers, light stabilizers, lubricants, antistatic agents, fillers, crosslinking agents, and nucleating agents. These additives may be used alone or in combination.

### (Spinning Step)

The spinning step is, for example, as illustrated in FIG. 1, a step wherein the PEF composition obtained in the PEF composition melting step is extruded (melt-spun) through a die 31 of an extruder 30 into filaments 11 and the filaments 11 are coated with an oil agent by means of an oiling roller 40 and bundled into an undrawn yarn 12. In the spinning step, the filaments 11 may be subjected to a so-called interlacing process where the filaments 11 are entangled using air.

The extrusion temperature during the melt-spinning is preferably from 230°C to 320°C, and more preferably from 270°C to 300°C, from the perspective of maintaining the PEF composition in a molten state to ensure a viscosity that allows for easy discharge. When the extrusion temperature is 230°C or above, spinning can be easily performed, and when the extrusion temperature is 320°C or below, a PEF raw fiber with high tenacity can be obtained. The extrusion temperature is preferably 20°C to 110°C higher than the melting point of PEF.

The extrusion temperature refers to a temperature of the die 31 of the extruder 30.

The rate (E) at which the PEF composition is extruded into filaments during the melt-spinning is preferably 1 to 30 m/min.

The rate at which the PEF composition is extruded into filaments during the melt-spinning (extrusion rate) refers to a rate at which the filaments 11 are discharged from the die 31 of the extruder 30.

As illustrated in FIG. 1, the extruder 30 used in the melt-spinning is a device having at least one die 31.

The hole size (die hole diameter) (D) of the die 31 of the extruder 30 is preferably 0.1 to 3.0 mm. When the die hole diameter is 0.1 mm or more, spinning can be easily performed, and when it is 3.0 mm or less, a PEF raw yarn having a high strength can be obtained.

The ratio of the length (L, unit: mm) of the channel of the die 31 to the die hole diameter (D, unit: mm) (L/D) is preferably 1 to 5.

Examples of oil agents applied by the oiling roller 40 include, from the perspective of facilitating the bundling of the filaments, silicone oil-based agents, fatty acid ester-based oil agents, higher alcohol-based oil agents, higher fatty acid-based oil agents, sulfuric acid ester-based oil agents, sulfonic acid-based oil agents, phosphoric acid ester-based oil agents, ether derivative-based oil agents, ester derivative-based oil agents, tertiary cation-based oil agents, quaternary cation-based surfactants, paraffins, and mineral oils.

### (Drawing Step)

The drawing step is, as illustrated in FIG. 1, for example, a step wherein the undrawn yarn 12 obtained in the spinning step is drawn by drawing rollers 50 to provide a PEF raw yarn 10. In the drawing step, the undrawn yarn 12 is continuously drawn without being recovered, after the undrawn yarn 12 has been obtained in the spinning step.

The drawing can be carried out, for example, as illustrated in FIG. 1, using two or more drawing rollers (drawing rollers 50a, 50b in the example of FIG. 1) operated at different rotation speeds (e.g., the downstream drawing roller 50b is rotated faster than the upstream drawing roller 50a). Alternatively or in addition, the undrawn yarn can be drawn by making the take-up rate (later described) faster than the extrusion rate.

It is advantageous to carry out the drawing while heating the drawing rollers to a temperature higher than the glass-transition temperature (Tg) of resin because a PEF raw yarn having a higher storage modulus can be obtained and drawing can be carried out efficiently.

The draw ratio in the drawing step is preferably greater than 6.0 to 10.0, and more preferably 6.5 to 10.0. A draw ratio of greater than 6.0 results in the resultant PEF raw yarn having a higher storage modulus, and a draw ratio of 10.0 or less results in improved productivity.

The draw ratio refers to a ratio of the length of an undrawn yarn prior to drawing to the length of the drawn yarn after drawing. The draw ratio can be adjusted for example by differentiating the rotation speeds of the drawing rollers 50a, 50b, as illustrated in FIG. 1.

The temperature of the undrawn yarn during the drawing step is preferably greater than 80°C to 180°C from the perspective of improving the strength of the resulting PEF raw yarn. When the temperature is 80°C or below, the molecules show poor mobility and cannot be easily aligned. When the temperature is above 180°C, the molecules flow and cannot be easily aligned.

### (Take-up Step)

The take-up step is, as illustrated in FIG. 1, for example, a step wherein the PEF raw yarn 10 after drawing is taken up by the take-up machine 60.

In the present disclosure, the ratio of the rate (T, unit: m/min) of taking up the PEF raw yarn to the rate (E, unit: m/min) of extrusion during the melt-spinning (T/E; hereinafter also referred to as "spin draft") is 700 to 2,000, and preferably 1,400 to 2,000. When the spin draft is 700 or more, the resultant PEF raw yarn shows increased storage modulus. When the spin draft is 2,000 or less, spinning can be easily carried out resulting in improved productivity.

The take-up rate during the take-up step is preferably 50 to 8,000 m/min.

### <PEF Raw Yarn>

The storage modulus of the PEF raw yarn obtained by the PEF raw yarn production method is preferably 1,500 MPa or more (e.g., 1,500 to 5,000 MPa), and more preferably 2,500 MPa or more. When the storage modulus is 1,500 MPa or more, the viscoelasticity of the PEF raw yarn improves so that a tire manufactured using a rubber/fiber composite that comprises the PEF raw yarn shows favorable uniformity.

The filaments extruded in the PEF raw yarn production method preferably have a fineness (line density) per filament of 0.05 to 5.0 tex, more preferably greater than 0.2 to 3.0 tex, and even more preferably 0.2 to 2.0 tex, from the perspective that such a fineness is proper for fiber applications and that a tire fiber with superior physical properties are obtainable.

As used herein, fineness refers to a value measured by the method described in (Fineness) in the section [Evaluations] described later.

The tenacity of the PEF raw yarn obtained by the PEF raw yarn production method is preferably 3.0 cN/dtex or more. Tenacity can be adjusted by changing the orientation or degree of crystallinity of the resin in the PEF raw yarn, for example by changing the draw ratio.

As used herein, tenacity refers to a value obtained by dividing the breaking tenacity of a PEF raw yarn pre-twisted 4 turns per 10 cm, measured in a tensile test at 25°C and 55% RH using a tensile tester, by the fineness.

The degree of crystallinity of the PEF raw yarn is preferably 10% or more. When the degree of crystallization is 10% or more, the orientation of the PEF raw yarn to the tensile direction improves to increase the tenacity of the PEF raw yarn.

Herein, degree of crystallinity refers to a value measured using an X-ray diffractometer.

### <Tire Fiber>

The PEF raw yarn can be formed into fiber by spinning two or more PEF raw yarns or one or more PEF raw yarns and one or more other yarns by heat treatment or other treatment. PEF raw yarns to be included in the fiber may have the same or different compositions.

It is preferred that the fiber is a tire fiber used for a tire cord (e.g., a carcass cord, a belt cord).

The above other raw yarns are PEF-free raw yarns and examples thereof include polyamide raw yarns (e.g., nylon raw yarn), polyester raw yarns (e.g., PET raw yarn and PEN raw yarn), and rayon yarns.

A plurality of fibers including the tire fiber can be twisted together to form a tire cord. The tire cord may have a single-twist structure of the tire fiber or may have a layer- or multiple-twist structure of a plurality of fibers including the tire fiber that comprises the PEF raw yarn. Examples of fibers other than the tire fiber that comprises the PEF raw yarn used for layer- or multiple-twist structure include metal fibers such as steel fiber, resin fibers such as PET fiber, and glass fibers.

### <Rubber/Fiber Composite>

A rubber/fiber composite can be obtained by adhering a tire fiber that comprises the PEF raw yarn (or tire cord that comprises the PEF raw yarn) to a rubber component with an adhesive. The rubber/fiber composite is a composite of rubber and fiber, where an adhesive layer and a rubber layer are laminated around the tire fiber that comprises the PEF raw yarn (or tire cord that comprises the PEF raw yarn).

Examples of the adhesive include adhesives in combination of a first bath treatment solution that comprise at least one compound selected from the group consisting of a thermoplastic polymer, a thermally reactive aqueous urethane resin, and an epoxide compound and a second bath treatment solution of resorcin/formalin/latex adhesives.

Examples of the thermoplastic polymer include, for example, those whose backbone consists of at least one of an ethylenically addition polymer and an urethane-based polymer which are substantially free of addition reactive carbon-carbon double bonds and mainly comprise a linear structure, having at least one crosslinkable functional as a pendant group.

Examples of the thermally reactive aqueous urethane resin include, for example, resins having more than one thermally dissociable, blocked isocyanate group in one molecule.

Examples of the epoxide compound include, for example, compounds having two or more epoxy groups in one molecule.

### <Tire>

The rubber/fiber composite can be used to manufacture a tire.

The rubber/fiber composite can be used for example as a carcass, belt, bead wire, insert, flipper, side reinforcement etc. of a tire.

The tire manufactured using the rubber/fiber composite comprises the PEF raw yarn having a high storage modulus and hence superior viscoelasticity. The tire thus has improved uniformity and superior high-speed durability.

### EXAMPLES

The present disclosure will now be described in detailed based on Examples, which however shall not be construed as limiting the scope of the present disclosure.

### (Example 1)

A PEF composition consisting only of 100% biobased PEF with a Mw of 75,600 and an intrinsic viscosity of 0.76 dl/g was melt-spun by passing it through a 96-hole die at an extrusion temperature of 275°C and 96 filaments were bundled into an undrawn yarn, which was continuously drawn without being recovered and then taken up to afford a PEF raw yarn having a fineness of 1,100 dtex (11.5 dtex per filament). The spin draft was as set forth in Table 1 and the time from the completion of extrusion of the filaments in the spinning step to the start of drawing of the undrawn yarn was not longer than 10 seconds.

### (Examples 2 to 3 and Comparative Example 1)

PEF raw yarns were obtained as in Example 1 except that the conditions of spin draft were changed.

### (Example 4)

A PEF raw yarn was obtained as in Example 1 except that 100% biobased PEF having an intrinsic viscosity of 1.10 dl/g was used and that the extrusion temperature was set to 310°C.

### (Example 5)

A PEF raw yarn was obtained as in Example 2 except that 100% biobased PEF having an intrinsic viscosity of 0.40 dl/g was used.

### (Comparative Example 2)

Changing the condition of spin draft to 2,500, attempts were made to obtain a PEF raw yarn as in Example 1, but fiber could not be obtained failed due to breakage during the drawing step.

### [Evaluations]

The PEFs used in Examples and Comparative Examples and the PEF raw yarns obtained in Examples and Comparative Examples were subjected to measurements described below.

### (Intrinsic Viscosity)

According to the method in compliance with ASTM D4603, an intrinsic viscosity of PEF was measured using a 4:6 (weight ratio) mixture of phenol and trichloroethylene as solvent.

### (Storage Modulus)

One filament was taken out from the PEF raw yarn and measured for storage modulus (MPa) under the following measurement conditions using a dynamic viscoelasticity meter:
Initial strain: 1%
Amplitude: 0.1%
Frequency: 10 Hz
Temperature: 25°C

### (Fineness)

1 m of PEF raw yarn was sampled, dried at 130°C for 30 min, left to cool to room temperature in a dried desiccator, and weighed. Fineness was calculated with 1 g per 10,000 m defined as 1 dtex.

### (Uniformity)

First and second twists of two tire fibers consisting only of PEF raw yarn were twisted together at a twist number of 47 turns per 10 cm length to produce a PEF cord with a fineness of 1,100 dtex/2, twist number of 47 × 47 (turns per 10 cm) and cord count of 60 per 5 cm. The obtained PEF cord was treated with adhesive B described in WO2014/133174 in the same manner as that described in Examples of WO2014/133174. A tire having a tire size of 195/65R15 was manufactured using the obtained reinforcement cord for a carcass ply.

Using a balance machine tire balance was measured, and further, the tire was rotated at 12 rpm on a 1.6 m diameter drum to measure force variations of the tire and drum shaft. In this way the uniformity of each tire was measured. In this test, force variations of tire and drum shaft occur when the tire has non-uniformity in circumferential direction.

The results were evaluated with the uniformity of Example 5 indexed to 100. In Table 1 larger index values indicate superior uniformity.

### (High-Speed Durability)

Tires were manufactured as in the evaluation of uniformity described above.

Each tire was mounted on a specified rim, and a drum test was carried out at a specified internal pressure under a specified load. Starting from 120 km/h, the test speed was increased in increments of 10 km/h every 20 minutes, and the speed at which tire failure occurred was measured. The results were evaluated with the high-speed durability of Example 5 indexed to 100. In Table 1, larger index values indicate superior high-speed durability.

**Table 1**

| | | Ex. 1 | Ex. 2 | Ex. 3 | Ex.4 | Ex. 5 | Comp. Ex. 1 | Camp. Ex. 2 |
|---|---|---|---|---|---|---|---|---|
| Production condition | PEF's intrinsic viscosity (dl/g) | 0.76 | 0.76 | 0.76 | 1.10 | 0.40 | 0.76 | 0.76 |
| | Spin draft | 1500 | 700 | 2000 | 1500 | 700 | 600 | 2500 |
| | Extrusion rate (m/min) | 3 | 3 | 3 | 3 | 3 | 3 | 3 |
| | Take-up rate (m/min) | 4500 | 2100 | 6000 | 4500 | 2100 | 1800 | 7500 |
| Evaluations | Storage modulus (MPa) | 2000 | 1500 | 2500 | 2200 | 1200 | 1100 | Fiber could not be obtained |
| | Fineness (dtex) | 1100 | 1100 | 1100 | 1100 | 1100 | 1100 | |
| | Uniformity (index) | 110 | 105 | 115 | 112 | 100 | 95 | |
| | High-speed durability (index) | 110 | 105 | 115 | 112 | 100 | 95 | |

### Industrial Applicability

According to the PEF raw yarn production method for the present embodiment, it is possible to efficiently obtain a PEF raw yarn which can be used for a tire of a reinforcement cord etc. of a tire.

### REFERENCE SIGNS LIST

10 PEF raw yarn
11 Filament
12 Undrawn yarn
13 PEF raw yarn obtained by two-stage spinning/drawing
20 Hopper
30 Extruder
31 Die
40 Oiling roller
50 Drawing roller
50a Drawing roller
50b Drawing roller
60 Take-up machine

## Claims

1. A method for producing a polyethylene-2,5-furandicarboxylate (PEF) raw yarn, comprising:
a spinning/drawing process wherein an undrawn yarn, obtained by melt-spinning of a PEF-containing resin composition, is continuously drawn into a PEF raw yarn without being recovered and the PEF raw yarn is taken up,
wherein the ratio of a rate (T) of taking up the PEF raw yarn to a rate (E) of extrusion of the resin composition into filaments during the melt-spinning (T/E) is 700 to 2,000.

2. The method according to claim 1, wherein PEF included in the PEF composition has an intrinsic viscosity of 0.5 to 1.5 dl/g.

## Patentansprüche

1. Verfahren zur Herstellung eines rohen Garns aus Polyethylen-2,5-furandicarboxylat (PEF), Folgendes umfassend:
ein Spinnstreck-Verfahren, wobei ein durch Schmelzspinnen einer PEF enthaltenden Harz-Zusammensetzung erhaltenes ungstrecktes Garn, kontinuierlich zu einem rohen PEF-Garn, ohne Rückgewinnen gestreckt wird und das rohe PEF-Garn aufgenommen wird,
wobei das Verhältnis einer Aufnehmungsrate (T) des rohen PEF-Garns zur zur Extrusionsrate (E) der Harzzusammensetzung zu Filamenten während des Schmelzspinnverfahrens (T/E) 700 bis 2000 beträgt.

2. Verfahren nach Anspruch 1, wobei das in der PEF-Zusammensetzung enthaltene PEF eine intrinsische Viskosität von 0,5 bis 1,5 dl/g aufweist.

## Revendications

1. Procédé de production d'un fil brut de polyéthylène-2,5-furandicarboxylate (PEF), comprenant:
un procédé de filage/étirage dans lequel un fil non étiré, obtenu par filage à l'état fondu d'une composition de résine contenant du PEF, est continuellement transformé en un fil brut de PEF sans être récupéré et le fil brut de PEF est repris,
dans lequel le rapport d'une vitesse (T) d'absorption du fil brut PEF à une vitesse (E) d'extrusion de la composition de résine en filaments pendant le filage à l'état fondu (T/E) est de 700 à 2000.

2. Procédé selon la revendication 1, dans lequel le PEF inclus dans la composition de PEF a une viscosité intrinsèque de 0,5 à 1,5 dl/g.
